(19) Europäisches Patentamt European Patent Office Office européen des brevets

(11) **EP 4 527 901 A1**

(12) **EUROPEAN PATENT APPLICATION**
published in accordance with Art. 153(4) EPC

(43) Date of publication:
26.03.2025 Bulletin 2025/13

(21) Application number: 23831308.4

(22) Date of filing: 23.06.2023

(51) International Patent Classification (IPC):
*C09D 17/00* (2006.01)    *B01J 13/00* (2006.01)
*C09D 7/62* (2018.01)

(52) Cooperative Patent Classification (CPC):
B01J 13/00; C09D 7/62; C09D 17/00

(86) International application number:
PCT/JP2023/023365

(87) International publication number:
WO 2024/004866 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.06.2022 JP 2022106206

(71) Applicant: Resonac Corporation
Tokyo 105-7325 (JP)
(72) Inventors:
• NAGATA, Ryutaro
Tokyo 105-7325 (JP)
• ARIFUKU, Motohiro
Tokyo 105-7325 (JP)
• YOSHIKAWA, Toru
Tokyo 105-7325 (JP)
• URASHIMA, Kosuke
Tokyo 105-7325 (JP)

(74) Representative: Hoffmann Eitle
Patent- und Rechtsanwälte PartmbB
Arabellastraße 30
81925 München (DE)

(54) **PARTICLE DISPERSION**

(57) A particle dispersion, containing: particles; and a liquid medium, in which a distance of a HSP value of the particles with respect to a HSP value of the liquid medium is 5.50 MPa$^{0.5}$ or less.

## Description

### Technical Field

The present disclosure relates to a particle dispersion and the like.

### Background Art

In order to produce a member for various industries, a particle dispersion containing particles dispersed in a liquid medium is used. For example, in Patent Literature 1 described below, a particle dispersion using silica particles is described.

### Citation List

### Patent Literature

Patent Literature 1: Japanese Unexamined Patent Publication No. 2015-519442

### Summary of Invention

### Technical Problem

In the particle dispersion containing the particles dispersed in the liquid medium, the particles may be aggregated to each other. In this case, the particle dispersion is required to have excellent dispersibility when performing a dispersion treatment.
One aspect of the present disclosure is to provide a particle dispersion having excellent dispersibility when performing a dispersion treatment.

### Solution to Problem

In some aspects, the present disclosure relates to [1] to [14] described below, and the like.

[1] A particle dispersion, containing:

particles; and
a liquid medium,
in which a distance of a HSP value of the particles with respect to a HSP value of the liquid medium is 5.50 $MPa^{0.5}$ or less.

[2] The particle dispersion according to [1],
in which the liquid medium includes an organic solvent.
[3] The particle dispersion according to [1],
in which the liquid medium includes a plurality of organic solvents.
[4] The particle dispersion according to [3],
in which the liquid medium includes methyl isobutyl ketone and toluene.
[5] The particle dispersion according to any one of [2] to [4],
in which a content of the organic solvent is 80% by mass or more on the basis of a total mass of the liquid medium.
[6] The particle dispersion according to any one of [1] to [5],
in which the particles include inorganic particles.
[7] The particle dispersion according to any one of [1] to [6],
in which the particles contain at least one type selected from the group consisting of silica, ceria, alumina, titania, boron nitride, and calcium titanate.
[8] The particle dispersion according to any one of [1] to [7],
in which the particles contain silica.
[9] The particle dispersion according to any one of [1] to [8],
in which the particles have a surface treatment agent on surfaces of the particles.
[10] The particle dispersion according to [9],
in which the surface treatment agent includes a silane compound having an alkoxysilyl group.

[11] The particle dispersion according to any one of [1] to [10],
in which a particle size D50 at 50% cumulation in a cumulative particle size distribution based on a volume of the particles is 0.1 to 20 μm.
[12] The particle dispersion according to any one of [1] to [11],
in which specific weight of the particles is 1.0 to 8.0 g/cm$^3$.
[13] The particle dispersion according to any one of [1] to [12],
in which a content of the particles (including a content of a surface treatment agent in a case where the particles are subjected to a surface treatment) is 30 to 90% by mass on the basis of the total mass of the particle dispersion.
[14] The particle dispersion according to any one of [1] to [13],
in which a viscosity at 25°C and a shear rate of 1 min$^{-1}$ is 350 mPa·s or more.

**Advantageous Effects of Invention**

According to one aspect of the present disclosure, it is possible to provide the particle dispersion having excellent dispersibility when performing the dispersion treatment.

**Description of Embodiments**

Hereinafter, an embodiment of the present disclosure will be described, but the present disclosure is not limited to such an embodiment.
In the present specification, a numerical range represented by using "to" indicates a range including numerical values described before and after "to" as the minimum value and the maximum value, respectively. In numerical ranges described in stages in the present specification, the upper limit value or the lower limit value of a numerical range in a certain stage can be arbitrarily combined with the upper limit value or the lower limit value of a numerical range in other stage. In a numerical range described in the present specification, the upper limit value or the lower limit value of the numerical range may be replaced with values described in Examples. "A or B" may include either A or B, and may include both thereof. Materials exemplified in the present specification can be used singly or in combinations of two or more kinds, unless otherwise specified. In a case where there are a plurality of substances corresponding to each component in a composition, the amount of each component in the composition indicates the total amount of the plurality of substances in the composition, unless otherwise specified.
A particle dispersion of the present embodiment contains particles and a liquid medium, and the distance of the HSP value of the particles with respect to the HSP value of the liquid medium (hereinafter, referred to as a "HSP distance of the particles with respect to the liquid medium") is 5.50 MPa$^{0.5}$ or less.
The particle dispersion of the present embodiment has excellent dispersibility (the dispersibility of the particles) when performing a dispersion treatment. According to the findings of the present inventors, it is preferable to compare the dispersibility of the particles in a state where solid contents are the same, and by comparing in a state where the solid content is 3% by mass, it is easy to determine a difference in the dispersibility, and it is possible to preferably evaluate the dispersibility. The particle dispersion of the present embodiment has excellent dispersibility when adjusting the solid content to 3% by mass immediately after performing a dispersion treatment (for example, a dispersion treatment by cavitation) on a mixed liquid obtained by mixing the contained components of the particle dispersion. According to the particle dispersion of the present embodiment, in evaluation (evaluation when adjusting the solid content to 3% by mass immediately after performing the dispersion treatment) described in Examples below, as a volume fraction of particles with a particle size that is a particle size D100 or more in a polydispersed state in which a coefficient of variation (CV) of the particle size is 20 or more, or a volume fraction of particles with a particle size that is twice a particle size D50 or more in a monodispersed state in which a coefficient of variation of the particle size is less than 20, for example, 7.0% or less (preferably 5.0% or less or less than 5.0%) can be obtained. In a case where the solid content of the particle dispersion is 3% by mass, it is possible to perform the evaluation without adjusting the solid content. The solid content of the particle dispersion may be adjusted by diluting with a liquid medium having the same composition as that of the liquid medium of the particle dispersion, or the solid content of the particle dispersion may be adjusted by volatilizing the liquid medium of the particle dispersion.
In a particle dispersion containing particles dispersed in a liquid medium, the particles may be aggregated to each other over time. In contrast, according to one aspect of the particle dispersion of the present embodiment, it is possible to obtain excellent dispersion stability (preservation stability) even in the case of preserving the particle dispersion immediately after performing the dispersion treatment. According to one aspect of the particle dispersion of the present embodiment, in evaluation (evaluation when the particle dispersion immediately after performing the dispersion treatment is left to stand for 7 days, and then, the solid content is adjusted to 3% by mass) described in Examples below, as a volume fraction of particles with a particle size that is a particle size D100 or more in a polydispersed state in which a coefficient of variation of the particle size is 20 or more, or a volume fraction of particles with a particle size that is twice a particle size D50 or more in a monodispersed state in which a coefficient of variation of the particle size is less than 20, for example, 20.0% or less (preferably 12.0% or less or 5.0% or less) can be obtained.

According to one aspect of the particle dispersion of the present embodiment, in evaluation (evaluation when the particle dispersion immediately after performing the dispersion treatment is left to stand for 30 days, and then, the solid content is adjusted to 3% by mass) described in Examples below, as a volume fraction of particles with a particle size that is a particle size D100 or more in a polydispersed state in which a coefficient of variation of the particle size is 20 or more, or a volume fraction of particles with a particle size that is twice a particle size D50 or more in a monodispersed state in which a coefficient of variation of the particle size is less than 20, for example, 30.0% or less (preferably 15.0% or less or 10.0% or less) can be obtained.

The usage of the particle dispersion of the present embodiment is not particularly limited. The particle dispersion of the present embodiment can be applied to the production or the use of a laminated plate (such as a copper clad laminate), a die-bonding film, a circuit connecting member, an abrasive liquid (such as a CMP polishing liquid), a sealing material, an electrode active material for a battery, a transparent conductive transfer film, and the like. For example, the particle dispersion of the present embodiment can be used to produce a semiconductor member, and can be used as slurry for obtaining a laminated plate, an insulating film (such as an insulating film of a sealing material), and the like of a semiconductor member.

The HSP distance of the particles with respect to the liquid medium can be calculated from the formula below on the basis of $\delta_d$ (a dispersion term), $\delta_p$ (a polarization term), and $\delta_h$ (a hydrogen-bond term) in a Hansen solubility parameter (HSP). $\delta_{d1}$, $\delta_{p1}$, and $\delta_{h1}$ are $\delta_d$, $\delta_p$, and $\delta_h$ of the particles, and $\delta_{d2}$, $\delta_{p2}$, and $\delta_{h2}$ are $\delta_d$, $\delta_p$, and $\delta_h$ of the liquid medium.

$$\text{HSP Distance} = \{4 \times (\delta_{d1} - \delta_{d2})^2 + (\delta_{p1} - \delta_{p2})^2 + (\delta_{h1} - \delta_{h2})^2\}^{0.5}$$

Since $\delta_d$, $\delta_p$, and $\delta_h$ of a commonly used substance have a known information source such as a database, for example, $\delta_d$, $\delta_p$, and $\delta_h$ of a desired substance are available by referring to the database. Parameters for the substance that are not registered in the database, for example, can be calculated by using computer software such as HSPiP (Hansen Solubility Parameter in Practice; written by Prof. Steven Abbott and Dr. Yamamoto Hiroshi).

$\delta_{d1}$, $\delta_{p1}$, and $\delta_{h1}$ of the particles can be calculated in the following procedure. First, the particle dispersion is dried to collect the particles, and 16 types of evaluation solvents for which parameters ($\delta_d$, $\delta_p$, and $\delta_h$) are known are prepared. Next, a dispersibility test of particles to be an evaluation target with respect to each of the evaluation solvents is performed, and whether each of the evaluation solvents is a "solvent with excellent dispersibility" or a "solvent with poor dispersibility" is determined. The dispersibility test can be performed by a method described in Examples below. Subsequently, each of the evaluation solvents is plotted in a three-dimensional space (a Hansen space) having $\delta_d$, $\delta_p$, and $\delta_h$ as coordinate axes, and then, a virtual true sphere including all the "solvents with excellent dispersibility" without including all the "solvents with poor dispersibility" is created in the three-dimensional space. Then, $\delta_d$, $\delta_p$, and $\delta_h$ at the center of the true sphere can be obtained as $\delta_{d1}$, $\delta_{p1}$, and $\delta_{h1}$ of the particles.

$\delta_{d1}$, $\delta_{p1}$, and $\delta_{h1}$ are changed in accordance with the type of material, the particle size, the particle size distribution (the coefficient of variation of the particle size), the contents of a surface treatment (such as the type of surface treatment agent, the used amount of the surface treatment agent, and a surface treatment method), and the like of the particles. For example, there is a tendency that, as the particle size increases, $\delta_{d1}$ increases, and $\delta_{p1}$ and $\delta_{h1}$ decrease. In addition, there is a tendency that, as the coefficient of variation of the particle size increases, $\delta_{p1}$ increases, and $\delta_{h1}$ decreases. $\delta_{d1}$, $\delta_{p1}$, and $\delta_{h1}$ of the particles after the surface treatment are targeted at all the particles after the surface treatment considering the influence of the surface treatment. As $\delta_{d1}$, $\delta_{p1}$, and $\delta_{h1}$, numerical values at 25°C can be used.

$\delta_{d2}$, $\delta_{p2}$, and $\delta_{h2}$ of the liquid medium can be calculated on the basis of the composition of the liquid medium in the particle dispersion. In a case where the liquid medium is a mixture of a plurality of components, $\delta_{d2}$, $\delta_{p2}$, and $\delta_{h2}$ of the liquid medium can be calculated as the total value of the product of a parameter ($\delta_d$, $\delta_p$, or $\delta_h$) for each of the components and a volume ratio of each of the components with respect to the entire mixture. As $\delta_d$, $\delta_p$, and $\delta_h$ of each of the components configuring the liquid medium, numerical values in a database of analysis software HSPiP (Hansen Solubility Parameter in Practice; written by Prof. Steven Abbott and Dr. Yamamoto Hiroshi) can be used. Parameters ($\delta_d$, $\delta_p$, and $\delta_h$) for the component that are not registered in the database may be calculated by using structure analysis software called as SMILES. As $\delta_{d2}$, $\delta_{p2}$, and $\delta_{h2}$, numerical values at 25°C can be used.

The present inventors have found that adjusting the HSP distance of the particles with respect to the liquid medium is effective in adjusting the dispersibility of the particles. Since the HSP distance of the particles with respect to the liquid medium is 5.50 MPa$^{0.5}$ or less, the particle dispersion of the present embodiment has excellent dispersibility. Regarding the reason for obtaining such an effect, it is speculated that, in a case where the HSP distance is in the range described above, it is easy for the particles and the liquid medium to be thermodynamically mixed with each other, which makes the dispersibility excellent. However, the reason for obtaining such an effect is not limited to this content.

The HSP distance (Unit: MPa$^{0.5}$) of the particles with respect to the liquid medium may be in the following range from the viewpoint of adjusting the dispersibility. The HSP distance of the particles with respect to the liquid medium may be 5.40 or less, 5.35 or less, 5.30 or less, 5.25 or less, 5.20 or less, 5.15 or less, 5.10 or less, 5.05 or less, 5.00 or less, 4.90 or less, 4.80 or less, 4.70 or less, 4.50 or less, 4.30 or less, 4.10 or less, 4.00 or less, 3.90 or less, 3.70 or less, 3.60 or less, 3.50 or less, or 3.45 or less. The HSP distance of the particles with respect to the liquid medium may be more than 0, 0.50 or more, 1.00 or more, 1.50 or more, 2.00 or more, 2.50 or more, 3.00 or more, 3.40 or more, 3.45 or more, 3.50 or more, 3.60 or more, 3.70 or more, 3.90 or more, 4.00 or more, 4.10 or more, 4.30 or more, 4.50 or more, 4.70 or more, 4.80 or more, 4.90 or more, 5.00 or more, 5.05 or more, 5.10 or more, 5.15 or more, 5.20 or more, 5.25 or more, or 5.30 or more. From these viewpoints, the HSP distance of the particles with respect to the liquid medium may be more than 0 and 5.50 or less, 3.00 to 5.50, or 3.00 to 5.40.

In the particle dispersion of the present embodiment, at least a part of the particles may be dispersed in the liquid medium. The particles configure the solid content in the particle dispersion. The particles may be inorganic particles and may be organic particles.

Examples of the constituent material of the inorganic particles include an oxide such as silica, ceria, alumina, titania, zirconia, magnesia, yttria, zinc oxide, and iron oxide; a nitride such as silicon nitride, titanium nitride, and boron nitride; a hydroxide such as a cerium hydroxide; a metal material such as copper, nickel, gold, silver, tin, zinc, nickel, platinum, bismuth, indium, and antimony; silicon carbide; calcium carbonate; aluminum sulfate; barium sulfate; potassium titanate; barium titanate; and calcium titanate. The inorganic particles may be produced by a melting method, a sol-gel method, a liquid phase method, or the like. As the constituent material of the organic particles, a resin material can be used, and examples thereof include an acrylic resin, a styrene resin, a urea resin, a phenol resin, an epoxy resin, and a benzoguanamine resin. Constituent materials of the particles can be used singly or in combinations of two or more kinds. From the viewpoint of easily obtaining excellent dispersibility, the particles may include inorganic particles, may contain a non-metal material, may contain at least one type selected from the group consisting of silica, ceria, alumina, titania, boron nitride, and calcium titanate, and may contain silica.

The particles may be subjected to a surface treatment, and may not be subjected to the surface treatment. The particles subjected to the surface treatment may have a surface treatment agent on the surfaces of the particles. A surface treatment method may be a dry treatment, and may be a wet treatment.

Examples of the surface treatment agent include a silane compound (for example, a silane coupling agent), a titanium compound (for example, a titanium coupling agent), and an aluminate compound (for example, an aluminate coupling agent). The surface treatment agent may have an alkoxy group, an alkoxysilyl group, a phenyl group, a vinyl group, an epoxy group, an acryloyl group, a methacryloyl group, an amino group, an ureido group, a mercapto group, an isocyanate group, or the like. From the viewpoint of easily obtaining excellent dispersibility, the surface treatment agent may include a silane compound, and may include a silane compound having an alkoxysilyl group.

From the viewpoint of easily obtaining excellent dispersibility, the silane compound may include a silane compound having an alkoxy group bonded to a silicon atom, as the silane compound having an alkoxysilyl group. In the silane compound, the number of alkoxy groups bonded to the silicon atom may be 1 to 4, 1 to 3, 2 to 3, or 3 to 4, from the viewpoint of easily obtaining excellent dispersibility.

The silane compound may include a silane compound having a nitrogen-containing organic group from the viewpoint of easily obtaining excellent dispersibility. Examples of the nitrogen-containing organic group include an alkyl amino group, an alkyl aminoalkyl group, an aryl amino group, an aryl aminoalkyl group, a heteroaryl amino group, and a heteroaryl aminoalkyl group. From the viewpoint of easily obtaining excellent dispersibility, the nitrogen-containing organic group may include an aryl aminoalkyl group, may include a phenyl aminoalkyl group, and may include a phenyl aminopropyl group.

Examples of the silane compound include N-phenyl-3-aminopropyl trimethoxysilane, phenyl trimethoxysilane, vinyl trimethoxysilane, epoxy trimethoxysilane, methacryl trimethoxysilane, aminotrimethoxysilane, ureidotrimethoxysilane, mercaptopropyl trimethoxysilane, isocyanate propyl trimethoxysilane, phenyl aminotrimethoxysilane, acryl trimethoxysilane, p-styryl trimethoxysilane, 3-acryloxypropyl trimethoxysilane, 3-methacryloxypropyl trimethoxysilane, 3-isocyanate propyl trimethoxysilane, and 3-aminopropyl trimethoxysilane. The silane compound may include N-phenyl-3-aminopropyl trimethoxysilane from the viewpoint of easily obtaining excellent dispersibility.

The content of the surface treatment agent may be in the following range with respect to 100 parts by mass of the particles (not including the content of the surface treatment agent). The content of the surface treatment agent may be 0.01 parts by mass or more, 0.05 parts by mass or more, 0.1 parts by mass or more, 0.3 parts by mass or more, 0.5 parts by mass or more, 0.8 parts by mass or more, or 1.0 part by mass or more, from the viewpoint of easily obtaining excellent dispersibility. The content of the surface treatment agent may be 10 parts by mass or less, 8.0 parts by mass or less, 5.0 parts by mass or less, 3.0 parts by mass or less, 2.0 parts by mass or less, 1.5 parts by mass or less, or 1.0 part by mass or less, from the viewpoint of easily obtaining excellent dispersibility. The content of the surface treatment agent may be 0.8 parts by mass or less, or 0.5 parts by mass or less. From these viewpoints, the content of the surface treatment agent may be 0.01 to 10 parts by mass, 0.05 to 5.0 parts by mass, or 0.1 to 2.0 parts by mass.

A particle size D50 at 50% cumulation in a cumulative particle size distribution based on the volume of the particles may be in the following range from the viewpoint of adjusting the dispersibility. The particle size D50 may be 0.1 $\mu$m or more, more than 0.1 $\mu$m, 0.3 $\mu$m or more, 0.5 $\mu$m or more, 0.8 $\mu$m or more, 1.0 $\mu$m or more, 1.2 $\mu$m or more, 1.5 $\mu$m or more, 1.8 $\mu$m or more, 2.0 $\mu$m or more, 2.2 $\mu$m or more, or 2.5 $\mu$m or more. The particle size D50 may be 20 $\mu$m or less, 15 $\mu$m or less, 10 $\mu$m or less, 9.0 $\mu$m or less, 8.0 $\mu$m or less, 7.0 $\mu$m or less, 6.0 $\mu$m or less, 5.0 $\mu$m or less, 4.0 $\mu$m or less, 3.0 $\mu$m or less, 2.8 $\mu$m or less, 2.5 $\mu$m or less, 2.2 $\mu$m or less, 2.0 $\mu$m or less, 1.8 $\mu$m or less, 1.5 $\mu$m or less, 1.2 $\mu$m or less, 1.0 $\mu$m or less, 0.8 $\mu$m or less, or 0.5 $\mu$m or less. From these viewpoints, the particle size D50 may be 0.1 to 20 $\mu$m, 0.5 to 20 $\mu$m, or 0.5 to 3.0 $\mu$m.

A particle size D95 at 95% cumulation in the cumulative particle size distribution based on the volume of the particles may be in the following range from the viewpoint of adjusting the dispersibility and from the viewpoint of easily obtaining a varnish preferable for producing the insulating film of the laminated plate. The particle size D95 may be 0.3 $\mu$m or more, 0.5 $\mu$m or more, 1.0 $\mu$m or more, 1.5 $\mu$m or more, 2.0 $\mu$m or more, 2.5 $\mu$m or more, 3.0 $\mu$m or more, 3.5 $\mu$m or more, 4.0 $\mu$m or more, or 4.5 $\mu$m or more. The particle size D95 may be 30 $\mu$m or less, 25 $\mu$m or less, 20 $\mu$m or less, 15 $\mu$m or less, 10 $\mu$m or less, 9.0 $\mu$m or less, 8.0 $\mu$m or less, 7.0 $\mu$m or less, 6.0 $\mu$m or less, 5.0 $\mu$m or less, 4.5 $\mu$m or less, 4.0 $\mu$m or less, 3.5 $\mu$m or less, 3.0 $\mu$m or less, 2.5 $\mu$m or less, 2.0 $\mu$m or less, 1.5 $\mu$m or less, 1.0 $\mu$m or less, or 0.6 $\mu$m or less. From these viewpoints, the particle size D95 may be 0.3 to 30 $\mu$m, 0.5 to 30 $\mu$m, or 0.5 to 5.0 $\mu$m.

The cumulative particle size distribution for obtaining the particle size D50 and the particle size D95 can be measured by a laser diffraction/scattering method.

The specific weight (Unit: g/cm$^3$) of the particles may be in the following range from the viewpoint of adjusting the dispersibility. The specific weight of the particles may be 0.1 or more, 0.5 or more, 1.0 or more, 1.5 or more, or 2.0 or more. The specific weight of the particles may be 8.0 or less, 7.0 or less, 6.0 or less, 5.0 or less, 4.0 or less, 3.0 or less, or 2.5 or less. From these viewpoints, the specific weight of the particles may be 0.1 to 8.0, 1.0 to 8.0, or 1.0 to 5.0.

$\delta_{d1}$ (Unit: MPa$^{0.5}$) of the particles may be in the following range from the viewpoint of adjusting the dispersibility. $\delta_{d1}$ of the particles may be 10.0 or more, 11.0 or more, 12.0 or more, 13.0 or more, 14.0 or more, 15.0 or more, 16.0 or more, 16.5 or more, 17.0 or more, 17.5 or more, or 18.0 or more. $\delta_{d1}$ of the particles may be 25.0 or less, 22.0 or less, 20.0 or less, 19.5 or less, 19.0 or less, 18.5 or less, 18.0 or less, 17.5 or less, 17.0 or less, or 16.5 or less. From these viewpoints, $\delta_{d1}$ of the particles may be 10.0 to 25.0, 16.0 to 20.0, or 16.5 to 19.0.

$\delta_{p1}$ (Unit: MPa$^{0.5}$) of the particles may be in the following range from the viewpoint of adjusting the dispersibility. $\delta_{p1}$ of the particles may be 1.0 or more, 1.5 or more, 2.0 or more, 2.5 or more, 3.0 or more, 3.5 or more, 4.0 or more, 4.5 or more, 5.0 or more, 5.5 or more, 6.0 or more, 6.5 or more, 7.0 or more, or 7.5 or more. $\delta_{p1}$ of the particles may be 15.0 or less, 12.0 or less, 10.0 or less, 9.5 or less, 9.0 or less, 8.5 or less, 8.0 or less, 7.5 or less, 7.0 or less, 6.5 or less, 6.0 or less, 5.5 or less, 5.0 or less, 4.5 or less, 4.0 or less, 3.5 or less, or 3.0 or less. From these viewpoints, $\delta_{p1}$ of the particles may be 1.0 to 15.0, 2.0 to 10.0, or 2.5 to 8.0.

$\delta_{h1}$ (Unit: MPa$^{0.5}$) of the particles may be in the following range from the viewpoint of adjusting the dispersibility. $\delta_{h1}$ of the particles may be 1.0 or more, 1.5 or more, 2.0 or more, 2.5 or more, 3.0 or more, 3.5 or more, 4.0 or more, 4.5 or more, 5.0 or more, 5.5 or more, 6.0 or more, 6.5 or more, 7.0 or more, 7.5 or more, or 8.0 or more. $\delta_{h1}$ of the particles may be 15.0 or less, 12.0 or less, 10.0 or less, 9.5 or less, 9.0 or less, 8.5 or less, 8.0 or less, 7.5 or less, 7.0 or less, 6.5 or less, or 6.0 or less. From these viewpoints, $\delta_{h1}$ of the particles may be 1.0 to 15.0, 3.0 to 10.0, or 5.0 to 8.5.

From the viewpoint of easily obtaining excellent dispersibility, the content of the inorganic particles (not including the content of the surface treatment agent in a case where the inorganic particles are subjected to the surface treatment) may be 50% by mass or more, more than 50% by mass, 70% by mass or more, 80% by mass or more, 90% by mass or more, 92% by mass or more, 95% by mass or more, 97% by mass or more, 98% by mass or more, 99% by mass or more, or substantially 100% by mass, on the basis of the total mass of the particles (the total amount of the particles contained in the particle dispersion: not including the content of the surface treatment agent in a case where the particles are subjected to the surface treatment).

As the content of the particles (including the content of the surface treatment agent in a case where the particles are subjected to the surface treatment), the content of the particles (not including the content of the surface treatment agent in a case where the particles are subjected to the surface treatment), the content of the inorganic particles (including the content of the surface treatment agent in a case where the particles are subjected to the surface treatment), or the content of the inorganic particles (not including the content of the surface treatment agent in a case where the particles are subjected to the surface treatment), a content A1 may be in the following range on the basis of the total mass of the particle dispersion from the viewpoint of adjusting the dispersibility. The content A1 may be 0.1% by mass or more, 0.5% by mass or more, 1% by mass or more, 5% by mass or more, 10% by mass or more, 15% by mass or more, 20% by mass or more, 25% by mass or more, 30% by mass or more, 35% by mass or more, 40% by mass or more, 45% by mass or more, 50% by mass or more, 55% by mass or more, 60% by mass or more, 65% by mass or more, 70% by mass or more, or 75% by mass or more. The content A1 may be 99% by mass or less, 95% by mass or less, 90% by mass or less, 85% by mass or less, 80% by mass or less, 75% by mass or less, 70% by mass or less, 65% by mass or less, 60% by mass or less, 55% by mass or less, 50% by mass or less, or 45% by mass or less. From these viewpoints, the content A1 may be 0.1 to 99% by mass, 20 to 95% by mass, or 30 to 90% by mass.

Examples of the liquid medium include an organic solvent, water, and a resin material (for example, a resin material that is liquid at 25°C). The organic solvent is an all-inclusive term for organic compounds having a property of dissolving other substances, and is widely used in coating, washing, printing, or the like. The organic solvent may be liquid at 25°C. In the particle dispersion of the present embodiment, only one type of the organic solvent, the water, and the resin material may be used, and at least two types of the organic solvent, the water, and the resin material may be used together. Each of organic solvents and resin materials can be used singly or in combinations of two or more kinds.

Examples of the organic solvent include a ketone-based compound such as methyl isobutyl ketone (MIBK), methyl ethyl ketone (MEK), acetone, cyclohexanone, acetophenone, and benzophenone; an aromatic hydrocarbon-based compound such as benzene, toluene, and xylene; an aliphatic hydrocarbon-based compound such as pentane, hexane, heptane, octane, nonane, and decane; an alicyclic hydrocarbon-based compound such as cyclohexane, methyl cyclohexane, and decahydronaphthalene; a chlorinated hydrocarbon-based compound such as chlorobenzene, dichlorobenzene, trichlorobenzene, methylene chloride, chloroform, carbon tetrachloride, and tetrachloroethylene; alcohol such as methanol, ethanol, n-propyl alcohol, isopropyl alcohol, 1-butanol, 2-butanol, t-butanol, 1-pentanol, 2-pentanol, 3-pentanol, 2-ethyl-1-hexanol, cyclohexanol, and benzyl alcohol; an ether-based compound such as ethyl ether, ethylene glycol monomethyl ether, anisole, phenyl ether, dioxane, and tetrahydrofuran; an ester-based compound such as ethyl acetate, butyl acetate, benzyl benzoate, and $\gamma$-butyrolactone; a nitrile-based compound such as acetonitrile; a sulfoxide compound such as dimethyl sulfoxide, diethyl sulfoxide, dipropyl sulfoxide, and diphenyl sulfoxide; an amide-based compound such as formamide, 1-methyl-2-pyrrolidone, and N-methyl-2-pyrrolidone; a carbonate-based compound such as ethylene carbonate and propylene carbonate; and an acid anhydride such as an acetic anhydride. From the viewpoint of easily obtaining excellent dispersibility, the liquid medium may include an organic solvent, may include methyl isobutyl ketone, may include a plurality of organic solvents, and may include methyl isobutyl ketone and toluene.

The liquid medium may include a hydrophobic organic solvent, and may include a plurality of hydrophobic organic solvents. As the hydrophobic organic solvent, a solvent of which the degree of solubility to water at 25°C is 1 g/100 mL or less may be used.

$\delta_{d2}$ (Unit: $MPa^{0.5}$) of the liquid medium may be in the following range from the viewpoint of adjusting the dispersibility. $\delta_{d2}$ of the liquid medium may be 10.0 or more, 11.0 or more, 12.0 or more, 13.0 or more, 14.0 or more, 15.0 or more, 16.0 or more, or 16.5 or more. $\delta_{d2}$ of the liquid medium may be 25.0 or less, 22.0 or less, 20.0 or less, 19.5 or less, 19.0 or less, 18.5 or less, 18.0 or less, 17.5 or less, 17.0 or less, 16.5 or less, 16.0 or less, or 15.5 or less. From these viewpoints, $\delta_{d2}$ of the liquid medium may be 10.0 to 25.0, 12.0 to 20.0, or 15.0 to 17.0.

$\delta_{p2}$ (Unit: $MPa^{0.5}$) of the liquid medium may be in the following range from the viewpoint of adjusting the dispersibility. $\delta_{p2}$ of the liquid medium may be 1.0 or more, 1.5 or more, 2.0 or more, 2.5 or more, 3.0 or more, 3.5 or more, 4.0 or more, 4.5 or more, 5.0 or more, 5.5 or more, or 6.0 or more. $\delta_{p2}$ of the liquid medium may be 15.0 or less, 12.0 or less, 10.0 or less, 9.5 or less, 9.0 or less, 8.5 or less, 8.0 or less, 7.5 or less, 7.0 or less, 6.5 or less, 6.0 or less, 5.5 or less, 5.0 or less, 4.5 or less, or 4.0 or less. From these viewpoints, $\delta_{p2}$ of the liquid medium may be 1.0 to 15.0, 2.0 to 10.0, or 3.5 to 6.5.

$\delta_{h2}$ (Unit: $MPa^{0.5}$) of the liquid medium may be in the following range from the viewpoint of adjusting the dispersibility. $\delta_{h2}$ of the liquid medium may be 1.0 or more, 1.5 or more, 2.0 or more, 2.5 or more, 3.0 or more, 3.5 or more, or 4.0 or more. $\delta_{h2}$ of the liquid medium may be 15.0 or less, 12.0 or less, 10.0 or less, 9.5 or less, 9.0 or less, 8.5 or less, 8.0 or less, 7.5 or less, 7.0 or less, 6.5 or less, 6.0 or less, 5.5 or less, 5.0 or less, 4.5 or less, 4.0 or less, or 3.5 or less. From these viewpoints, $\delta_{h2}$ of the liquid medium may be 1.0 to 15.0, 2.0 to 8.0, or 3.0 to 4.5.

From the viewpoint of easily obtaining excellent dispersibility, the content of the organic solvent may be 20% by mass or more, 30% by mass or more, 50% by mass or more, more than 50% by mass, 70% by mass or more, 80% by mass or more, 90% by mass or more, 92% by mass or more, 95% by mass or more, 97% by mass or more, 98% by mass or more, 99% by mass or more, or substantially 100% by mass, on the basis of the total mass of the liquid medium (the total amount of the liquid medium contained in the particle dispersion).

From the viewpoint of adjusting the dispersibility, the content of the liquid medium may be in the following range with respect to 100 parts by mass of the particles (including the content of the surface treatment agent in a case where the particles are subjected to the surface treatment), or with respect to 100 parts by mass of the particles (not including the content of the surface treatment agent in a case where the particles are subjected to the surface treatment). The content of the liquid medium may be 10 parts by mass or more, 15 parts by mass or more, 20 parts by mass or more, 25 parts by mass or more, 30 parts by mass or more, 35 parts by mass or more, 40 parts by mass or more, 45 parts by mass or more, 50 parts by mass or more, 60 parts by mass or more, 80 parts by mass or more, 100 parts by mass or more, or 120 parts by mass or more. The content of the liquid medium may be 200 parts by mass or less, 150 parts by mass or less, 120 parts by mass or less, 100 parts by mass or less, less than 100 parts by mass, 80 parts by mass or less, 60 parts by mass or less, 50 parts by mass or less, 45 parts by mass or less, 40 parts by mass or less, or 35 parts by mass or less. From these viewpoints, the content of the liquid medium may be 10 to 200 parts by mass, 20 to 100 parts by mass, or 30 to 60 parts by mass.

From the viewpoint of adjusting the dispersibility, the content of the liquid medium may be in the following range on the basis of the total mass of the particle dispersion. The content of the liquid medium may be 1% by mass or more, 5% by mass or more, 10% by mass or more, 15% by mass or more, 20% by mass or more, 25% by mass or more, 30% by mass or more, 35% by mass or more, 40% by mass or more, 45% by mass or more, or 50% by mass or more. The content of the liquid medium may be 99.9% by mass or less, 99.5% by mass or less, 99% by mass or less, 95% by mass or less, 90% by mass or less, 85% by mass or less, 80% by mass or less, 75% by mass or less, 70% by mass or less, 65% by mass or less, 60% by mass or less, 55% by mass or less, 50% by mass or less, 45% by mass or less, 40% by mass or less, 35% by mass or less, 30% by mass or less, or 25% by mass or less. From these viewpoints, the content of the liquid medium may be 1 to 99.9% by mass, 5 to 80% by mass, or 10 to 70% by mass.

From the viewpoint of adjusting the dispersibility, the total amount of the particles and the liquid medium (including the content of the surface treatment agent in a case where the particles are subjected to the surface treatment), the total amount of the particles and the liquid medium (not including the content of the surface treatment agent in a case where the particles are subjected to the surface treatment), the total amount of the inorganic particles and the liquid medium (including the content of the surface treatment agent in a case where the inorganic particles are subjected to the surface treatment), or the total amount of the inorganic particles and the liquid medium (not including the content of the surface treatment agent in a case where the inorganic particles are subjected to the surface treatment) may be 50% by mass or more, more than 50% by mass, 70% by mass or more, 80% by mass or more, 90% by mass or more, 92% by mass or more, 95% by mass or more, 97% by mass or more, 98% by mass or more, 99% by mass or more, or substantially 100% by mass, on the basis of the total mass of the particle dispersion.

The particle dispersion of the present embodiment may contain a component other than the particles and the liquid medium. As such a component, for example, a component to be dissolved in the liquid medium can be used. Examples of the component other than the particles and the liquid medium include a resin material that is not liquid at 25°C.

A viscosity V1 (Unit: mPa·s) of the particle dispersion at 25°C and a shear rate of 1 min$^{-1}$ may be in the following range. The viscosity V1 may be 100 or more, 150 or more, 200 or more, 250 or more, 300 or more, 350 or more, 400 or more, 450 or more, 500 or more, 550 or more, 600 or more, 650 or more, 700 or more, or 750 or more, from the viewpoint of easily obtaining excellent dispersibility by suppressing particle settling. The viscosity V1 may be 5000 or less, 4000 or less, 3000 or less, 2000 or less, 1500 or less, 1000 or less, 950 or less, 900 or less, 850 or less, 800 or less, 750 or less, 700 or less, 650 or less, 600 or less, 550 or less, 500 or less, 450 or less, 400 or less, 350 or less, 300 or less, or 250 or less, from the viewpoint of easily obtaining excellent dispersibility by suppressing the particle settling. From these viewpoints, the viscosity V1 may be 100 to 5000, 150 to 2000, or 200 to 800.

A viscosity V10 (Unit: mPa·s) of the particle dispersion at 25°C and a shear rate of 10 min$^{-1}$ may be in the following range. The viscosity V10 may be 10 or more, 20 or more, 30 or more, 40 or more, 50 or more, 60 or more, 70 or more, 80 or more, 90 or more, 100 or more, 110 or more, 120 or more, or 130 or more, from the viewpoint of easily obtaining excellent dispersibility by suppressing the particle settling. The viscosity V10 may be 1000 or less, 900 or less, 800 or less, 700 or less, 600 or less, 500 or less, 400 or less, 300 or less, 250 or less, 200 or less, 150 or less, 140 or less, 130 or less, 120 or less, 110 or less, 100 or less, 90 or less, 80 or less, 70 or less, 60 or less, 50 or less, 40 or less, or 30 or less, from the viewpoint of easily obtaining excellent dispersibility by suppressing the particle settling. From these viewpoints, the viscosity V10 may be 10 to 1000, 15 to 500, or 20 to 150.

**Examples**

Hereinafter, the present disclosure will be described in more details by Examples. However, the present disclosure is not limited to such Examples.

<Preparation of Materials Used>

(Particles)

Silica particles A: manufactured by ADMATECHS COMPANY LIMITED, product name "SO-32R", particles produced by a melting method, specific weight of 2.2 g/cm$^3$
Silica particles B1: manufactured by NIPPON SHOKUBAI CO., LTD., product name "KE-S50", particles produced by a sol-gel method, specific weight of 2.2 g/cm$^3$
Silica particles B2: manufactured by NIPPON SHOKUBAI CO., LTD., product name "KE-S150", particles produced by a sol-gel method, specific weight of 2.2 g/cm$^3$
Silica particles B3: manufactured by NIPPON SHOKUBAI CO., LTD., product name "KE-S250", particles produced by a sol-gel method, specific weight of 2.2 g/cm$^3$

(Surface Treatment Agent)

Silane coupling agent: N-phenyl-3-aminopropyl trimethoxysilane, manufactured by Shin-Etsu Chemical Co., Ltd., product name "KBM-573"

(Liquid Medium)

Methyl isobutyl ketone (MIBK)
Toluene

<Preparation of Particle Dispersion>

(Example 1)

100 parts by mass of the silica particles A, 0.5 parts by mass of the silane coupling agent, $3.5 \times 10^{-2}$ parts by mass of pure water, and 42.8 parts by mass of a liquid medium (MIBK : Toluene = 1 : 1 (a volume ratio)) were mixed in a beaker to obtain a mixed liquid. Next, the beaker with this mixed liquid was put in a water bath at 60°C, and then, a wet treatment was performed at a rotation frequency of 150 min$^{-1}$ for 1 hour using two agitating blades (made of Teflon) by a three-one motor to obtain a mixed liquid with a solid content of 70% by mass.
After that, by using Nano-Mizer device (manufactured by YOSHIDA KIKAI CO., LTD., product name "NM2-2000AR") and FILMIX device (manufactured by PRIMIX Corporation, product name "FM40-40L"), a dispersion treatment (Nano-Mizer treatment condition: passing through a nozzle three times; FILMIX treatment condition: 40 m/s, 1 minute) by cavitation was performed to prepare a particle dispersion (silica slurry) with a solid content of 70% by mass.

(Examples 2, 3, and 7)

A particle dispersion (silica slurry) with a solid content of 70% by mass was prepared as with Example 1, except that the volume ratio of the MIBK and the toluene in the liquid medium was changed to a ratio in Table 1.

(Example 4)

100 parts by mass of the silica particles A, 1.0 part by mass of the silane coupling agent, and $7.0 \times 10^{-2}$ parts by mass of pure water were mixed with each other, and then, were left to stand at a temperature of 60°C and humidity of 60% for 24 hours by using a thermo-hygrostat. Next, 42.8 parts by mass of a liquid medium (MIBK : Toluene = 1 : 1 (a volume ratio)) was mixed to obtain a mixed liquid with a solid content of 70% by mass.
Subsequently, this mixed liquid was agitated (treatment condition: 2000 min$^{-1}$, 1 minute) by using product name "THINKY MIXER ARE-310" manufactured by THINKY CORPORATION (THINKY) to remove the aggregate of the silica particles. After that, by using Nano-Mizer device (manufactured by YOSHIDA KIKAI CO., LTD., product name "NM2-2000AR") and FILMIX device (manufactured by PRIMIX Corporation, product name "FM40-40L"), a dispersion treatment (Nano-Mizer treatment condition: passing through a nozzle three times; FILMIX treatment condition: 40 m/s, 1 minute) by cavitation was performed to prepare a particle dispersion (silica slurry) with a solid content of 70% by mass.

(Example 5)

A particle dispersion (silica slurry) with a solid content of 70% by mass was prepared as with Example 4, except that the used amount of the silane coupling agent was changed to 0.5 parts by mass.

(Examples 6 and 10 and Comparative Example 5)

100 parts by mass of the silica particles B3, 0.5 parts by mass of the silane coupling agent, $3.5 \times 10^{-2}$ parts by mass of pure water, and 33.3 parts by mass of a liquid medium (a mixing ratio of MIBK and toluene: refer to Table 1) were mixed in a beaker to obtain a mixed liquid. Next, the beaker with this mixed liquid was put in a water bath at 60°C, and then, a wet treatment was performed at a rotation frequency of 150 min$^{-1}$ for 1 hour using two agitating blades (made of Teflon) by a three-one motor to obtain a mixed liquid with a solid content of 75% by mass.
After that, by using Nano-Mizer device (manufactured by YOSHIDA KIKAI CO., LTD., product name "NM2-2000AR") and FILMIX device (manufactured by PRIMIX Corporation, product name "FM40-40L"), a dispersion treatment (Nano-Mizer treatment condition: passing through a nozzle three times; FILMIX Treatment Condition: 40 m/s, 1 minute) by cavitation was performed to prepare a particle dispersion (silica slurry) with a solid content of 75% by mass.

(Example 8 and Comparative Examples 1 to 3)

100 parts by mass of the silica particles B1, 0.5 parts by mass of the silane coupling agent, $3.5 \times 10^{-2}$ parts by mass of pure water, and 122 parts by mass of a liquid medium (a mixing ratio of MIBK and toluene: refer to Table 1) were mixed in a beaker to obtain a mixed liquid. Next, the beaker with this mixed liquid was put in a water bath at 60°C, and then, a wet treatment was performed at a rotation frequency of 150 min$^{-1}$ for 1 hour using two agitating blades (made of Teflon) by a three-one motor to obtain a mixed liquid with a solid content of 45% by mass.

After that, by using Nano-Mizer device (manufactured by YOSHIDA KIKAI CO., LTD., product name "NM2-2000AR") and FILMIX device (manufactured by PRIMIX Corporation, product name "FM40-40L"), a dispersion treatment (Nano-Mizer treatment condition: passing through a nozzle three times; FILMIX treatment condition: 40 m/s, 1 minute) by cavitation was performed to prepare a particle dispersion (silica slurry) with a solid content of 45% by mass.

(Examples 9, 11, and 14 and Comparative Example 4)

100 parts by mass of the silica particles B2, 0.5 parts by mass of the silane coupling agent, $3.5 \times 10^{-2}$ parts by mass of pure water, and 42.8 parts by mass of a liquid medium (a mixing ratio of MIBK and toluene: refer to Table 1) were mixed in a beaker to obtain a mixed liquid. Next, the beaker with this mixed liquid was put in a water bath at 60°C, and then, a wet treatment was performed at a rotation frequency of 150 min$^{-1}$ for 1 hour using two agitating blades (made of Teflon) by a three-one motor to obtain a mixed liquid with a solid content of 70% by mass.

After that, by using Nano-Mizer device (manufactured by YOSHIDA KIKAI CO., LTD., product name "NM2-2000AR") or FILMIX device (manufactured by PRIMIX Corporation, product name "FM40-40L"), a dispersion treatment (Nano-Mizer treatment condition: passing through a nozzle three times, a product obtained by performing a treatment three times; FILMIX treatment condition: 40 m/s, 1 minute) by cavitation was performed to prepare a particle dispersion (silica slurry) with a solid content of 70% by mass.

(Example 12)

A particle dispersion (silica slurry) with a solid content of 70% by mass was prepared as with Example 4, except that only the MIBK was used as the liquid medium.

(Example 13)

A particle dispersion (silica slurry) with a solid content of 70% by mass was prepared as with Example 5, except that only the MIBK was used as the liquid medium.

<HSP Value of Particles>

The particle dispersion (the silica slurry) described above was dried in a condition of 130°C and 1 hour to collect powdered particles. A particle size D50 (hereinafter, referred to as a "particle size A") and a particle size D100 of these particles were obtained on the basis of real image observation using a scanning electron microscopy (SEM).

Next, 0.02 g of the particles was put in each of 16 containers (screw bottles), and then, 20 mL of 16 types of organic solvents was put in each of the containers to prepare a test liquid (content of particles: approximately 0.1% by mass). As 16 types of organic solvents, MIBK (methyl isobutyl ketone), toluene, methanol, cyclohexanol, acetone, acetonitrile, formamide, benzyl benzoate, dimethyl sulfoxide, ethyl acetate, ethanol, an acetic anhydride, γ-butyrolactone, NEK (methyl ethyl ketone), 1-butanol, and cyclohexane were used. The test liquid described above was subjected to a dispersion treatment for 5 minutes by using an ultrasonic dispersing device (manufactured by AS ONE CORPORATION, product name "VS-D100"). Next, the particle size distribution (the cumulative particle size distribution, the volume distribution) of the particles in the test liquid was measured by using a particle size analyzer (manufactured by SHIMADZU CORPORATION, product name "SALD-7500"). For each case of using 16 types of organic solvents described above, on the basis of the measurement result of the particle size distribution, a particle size D50 (hereinafter, refer to as a "particle size B") was obtained. Note that the particle size distribution of standard particles (MBP1-10) having a specific particle size distribution was measured in advance, and the validity of the measurement contents was checked.

For each case of using 16 types of organic solvents described above, a coefficient of variation (CV) of the particle size was obtained on the basis of the measurement result of the particle size distribution described above. A case where the coefficient of variation is 20 or more was determined as being in a polydispersed state, and a case where the coefficient of variation is less than 20 was determined as being in a monodispersed state. For 16 types of organic solvents described above, whether the organic solvent is a "solvent with poor dispersibility" or a "solvent with excellent dispersibility" was determined on the basis of the following criteria.

For the criteria of the aggregation in the monodispersed state, a particle size twice the particle size A described above (assuming a particle size when two particles are in contact with each other) was adopted as a threshold value, an organic solvent in a case where the particle size B described above is greater than or equal to the threshold value was determined as the "solvent with poor dispersibility", and an organic solvent in a case where the particle size B described above is less than the threshold value was determined as the "solvent with excellent dispersibility".

On the other hand, for the criteria of the aggregation in the polydispersed state, since the distribution of the particle size is wide, from the viewpoint that it is desirable to set criteria easy to target aggregated particles, the particle size D100 described above was adopted as a threshold value, an organic solvent in a case where the particle size B described above is greater than or equal to the threshold value was determined as the "solvent with poor dispersibility", and an organic solvent in a case where the particle size B described above is less than the threshold value was determined as the "solvent with excellent dispersibility".

Next, 16 types of organic solvents described above were plotted in a three-dimensional space (a Hansen space) having $\delta_d$, $\delta_p$, and $\delta_h$ as coordinate axes by using analysis software HSPiP (Hansen Solubility Parameter in Practice; written by Prof. Steven Abbott and Dr. Yamamoto Hiroshi). As $\delta_d$, $\delta_p$, and $\delta_h$ of each of the organic solvents, numerical values in a database of the analysis software described above were used.

Subsequently, a virtual true sphere including all the "solvents with excellent dispersibility" described above without including all the "solvents with poor dispersibility" described above was created in the three-dimensional space described above. Then, $\delta_d$, $\delta_p$, and $\delta_h$ at the center of the true sphere were obtained as $\delta_{d1}$, $\delta_{p1}$, and $\delta_{h1}$ of the particles. $\delta_{d1}$, $\delta_{p1}$, and $\delta_{h1}$ of the particles in Examples and Comparative Examples are shown in Table 1.

<HSP Value of Liquid Medium>

As $\delta_d$, $\delta_p$, and $\delta_h$ of the MIBK and the toluene used as the liquid medium, numerical values in a database of analysis software HSPiP (Hansen Solubility Parameter in Practice; written by Prof. Steven Abbott and Dr. Yamamoto Hiroshi) were used. As $\delta_{d2}$, $\delta_{p2}$, and $\delta_{h2}$ of the liquid medium that is the mixed liquid of the MIBK and the toluene, the total value of the product of a parameter ($\delta_d$, $\delta_p$, or $\delta_h$) for each of the solvents and a volume ratio of each of the solvents was used. $\delta_{d2}$, $\delta_{p2}$, and $\delta_{h2}$ of the liquid medium in Examples and Comparative Examples are shown in Table 1. Since the used amount of the pure water mixed together with the silane coupling agent was small, the influence of this pure water was not considered.

<Calculation of HSP Distance>

The HSP distance of the particles with respect to the liquid medium was calculated from the following formula on the basis of $\delta_{d1}$, $\delta_{p1}$, and $\delta_{h1}$ of the particles and $\delta_{d2}$, $\delta_{p2}$, and $\delta_{n2}$ of the liquid medium. The HSP distance is shown in Table 1.

$$\text{HSP distance} = \{4 \times (\delta_{d1} - \delta_{d2})^2 + (\delta_{p1} - \delta_{p2})^2 + (\delta_{h1} - \delta_{h2})^2\}^{0.5}$$

<Measurement of Viscosity>

Viscosities V1 and V10 of the particle dispersion (the silica slurry) described above at 25°C and a shear rate of 1 min$^{-1}$ and 10 min$^{-1}$ were measured by using an E-type viscosimeter (manufactured by Toki Sangyo Co., Ltd., product name "TV-22 Type"). The result is shown in Table 2.

<Measurement of Particle Size>

The particle dispersion (the silica slurry) immediately after the preparation (immediately after the dispersion treatment by cavitation, the same applies below) was diluted with the liquid medium of each of Examples or each of Comparative Examples to obtain a test liquid with a solid content of 3% by mass. Next, the particle size distribution (the cumulative particle size distribution, the volume distribution) of the particles in this test liquid was measured by using a particle size analyzer (manufactured by SHIMADZU CORPORATION, product name "SALD-7500") of a laser diffraction/scattering method. In addition, on the basis of the particle size distribution, D50 and D95 were obtained as an average particle size. Such average particle sizes are shown in Table 2.

The particle size distribution described above was measured in the following procedure. Note that the particle size distribution of standard particles (MBP1-10) having a specific particle size distribution was measured in advance, and the validity of the measurement contents was checked.

(1) Approximately 0.5 mL of the liquid medium of each of Examples or each of Comparative Examples was dropped onto a glass substrate for measurement, and then, a glass slide was put thereon so as to prevent air bubbles, and a test piece was obtained.

(2) This test piece was attached to a sample holder, and then, blank measurement was performed only on the liquid medium.

(3) Approximately 0.5 mL of the test liquid (a solid content of 3% by mass) described above was dropped onto a glass substrate for measurement, and then, a glass slide was put thereon so as to prevent air bubbles, and a test piece was obtained.

(4) This test piece was attached to a sample holder, and then, a particle size distribution was measured. The particle size distribution was monitored, and the distribution was measured when it ceased to fluctuate.

<Evaluation of Dispersibility>

On the basis of the measurement result of the particle size distribution obtained in the measurement of the particle size described above, the coefficient of variation (CV) of the particle size was obtained. A case where the coefficient of variation is 20 or more was determined as being in a polydispersed state, and a case where the coefficient of variation is less than 20 was determined as being in a monodispersed state. In the particle dispersion obtained by using the silica particles A, the coefficient of variation was 55 (polydispersed), in the particle dispersion obtained by using the silica particles B 1, the coefficient of variation was 12 (monodispersed), in the particle dispersion obtained by using the silica particles B2, the coefficient of variation was 17 (monodispersed), and in the particle dispersion obtained by using the silica particles B3, the coefficient of variation was 18 (monodispersed).

For the criteria of the aggregation in the monodispersed state, a particle size twice the particle size D50 (assuming a particle size when two particles are in contact with each other) was adopted as a threshold value, and a volume fraction of particles with a particle size that is greater than or equal to the threshold value was calculated. On the other hand, for the criteria of the aggregation in the polydispersed state, since the distribution of the particle size is wide, from the viewpoint that it is desirable to set criteria easy to target aggregated particles, the particle size D100 was adopted as a threshold value, and a volume fraction of particles with a particle size that is greater than or equal to the threshold value was calculated. In the particle dispersion obtained by using the silica particles A, the particle size D100 was 5 $\mu$m. The volume fraction of the particles with a particle size that is greater than or equal to the threshold value is shown in Table 2. As shown in Table 2, in each of Examples, the volume fraction (immediately after the preparation) was 7.0% or less.

The particle dispersion immediately after the preparation in each of Examples was left to stand for 7 days, was then vibrated and agitated with hand for 10 seconds 20 times, and further, was diluted with the liquid medium in each of Examples to obtain a test liquid with a solid content of 3% by mass. Next, the particle size distribution (the cumulative particle size distribution, the volume distribution) of the particles was measured in the same procedure as that of the evaluation method described above. A volume fraction of particles with a particle size that is greater than or equal to the same threshold value as described above is shown in Table 2.

The particle dispersion immediately after the preparation in Examples 1 to 5 was left to stand for 30 days, was then vibrated and agitated with a hand for 10 seconds 20 times, and further, was diluted with the liquid medium in each of Examples to obtain a test liquid with a solid content of 3% by mass. Next, the particle size distribution (the cumulative particle size distribution, the volume distribution) of the particles was measured in the same procedure as that of the evaluation method described above. A volume fraction of particles with a particle size that is greater than or equal to the same threshold value as described above is shown in Table 2.

[Table 1]

| | | Particles | | | | | | Liquid medium | | | | | | HSP distance |
|---|---|---|---|---|---|---|---|---|---|---|---|---|---|---|
| | | Type | Surface treatment | Amount of surface treatment agent | $\delta_{d1}$ | $\delta_{p1}$ | $\delta_{h1}$ | MIBK: Toluene | Content | $\delta_{d2}$ | $\delta_{p2}$ | $\delta_{h2}$ | |
| | | - | - | Parts by mass | MPa$^{0.5}$ | | | Volume ratio | Parts by mass | MPa$^{0.5}$ | | | MPa$^{0.5}$ |
| Example | 1 | A | Wet | 0.5 | 17.6 | 5.0 | 5.6 | 1 : 1 | 42.8 | 16.7 | 3.8 | 3.1 | 3.4 |
| | 2 | A | Wet | 0.5 | 17.6 | 5.0 | 5.6 | 3 : 2 | 42.8 | 16.4 | 4.2 | 3.3 | 3.5 |
| | 3 | A | Wet | 0.5 | 17.6 | 5.0 | 5.6 | 2 : 1 | 42.8 | 16.2 | 4.5 | 3.4 | 3.6 |
| | 4 | A | Dry | 1.0 | 17.8 | 5.8 | 5.1 | 1 : 1 | 42.8 | 16.7 | 3.8 | 3.1 | 3.9 |
| | 5 | A | Dry | 0.5 | 17.6 | 5.1 | 6.4 | 1 : 1 | 42.8 | 16.7 | 3.8 | 3.1 | 4.1 |
| | 6 | B3 | Wet | 0.5 | 18.2 | 2.8 | 6.5 | 1 : 1 | 33.3 | 16.7 | 3.8 | 3.1 | 4.7 |
| | 7 | A | Wet | 0.5 | 17.6 | 5.0 | 5.6 | MIBK Only | 42.8 | 15.3 | 6.1 | 4.1 | 5.0 |
| | 8 | B1 | Wet | 0.5 | 16.5 | 7.6 | 8.3 | MIBK Only | 122 | 15.3 | 6.1 | 4.1 | 5.1 |
| | 9 | B2 | Wet | 0.5 | 17.6 | 3.1 | 7.7 | 1 : 1 | 42.8 | 16.7 | 3.8 | 3.1 | 5.1 |
| | 10 | B3 | Wet | 0.5 | 18.2 | 2.8 | 6.5 | 3:2 | 33.3 | 16.4 | 4.2 | 3.3 | 5.1 |
| | 11 | B2 | Wet | 0.5 | 17.6 | 3.1 | 7.7 | 3:2 | 42.8 | 16.4 | 4.2 | 3.3 | 5.2 |
| | 12 | A | Dry | 1.0 | 17.8 | 5.8 | 5.1 | MIBK Only | 42.8 | 15.3 | 6.1 | 4.1 | 5.2 |
| | 13 | A | Dry | 0.5 | 17.6 | 5.1 | 6.4 | MIBK Only | 42.8 | 15.3 | 6.1 | 4.1 | 5.3 |
| | 14 | B2 | Wet | 0.5 | 17.6 | 3.1 | 7.7 | 2 : 1 | 42.8 | 16.2 | 4.5 | 3.4 | 5.3 |
| Comparative Example | 1 | B1 | Wet | 0.5 | 16.5 | 7.6 | 8.3 | 2 : 1 | 122 | 16.2 | 4.5 | 3.4 | 5.8 |
| | 2 | B1 | Wet | 0.5 | 16.5 | 7.6 | 8.3 | 3 : 2 | 122 | 16.4 | 4.2 | 3.3 | 6.1 |
| | 3 | B1 | Wet | 0.5 | 16.5 | 7.6 | 8.3 | 1 : 1 | 122 | 16.7 | 3.8 | 3.1 | 6.5 |
| | 4 | B2 | Wet | 0.5 | 17.6 | 3.1 | 7.7 | MIBK Only | 42.8 | 15.3 | 6.1 | 4.1 | 6.6 |
| | 5 | B3 | Wet | 0.5 | 18.2 | 2.8 | 6.5 | MIBK Only | 33.3 | 15.3 | 6.1 | 4.1 | 7.1 |

[Table 2]

| | | | Viscosity | | Particle size | | Dispersibility | | | |
| | | | V1 | V10 | D50 | D95 | Criteria | Immediately after preparation | after 7 days | after 30 days |
| | | | mPa·s | | µm | | | | | |
| Example | 1 | | 452.0 | 82.3 | 1.5 | 4.5 | Polydispersed | 3.4 | 3.4 | 4.9 |
| | 2 | | 346.3 | 56.0 | 1.5 | 4.5 | Polydispersed | 2.5 | 3.2 | 3.8 |
| | 3 | | 347.5 | 50.6 | 1.5 | 4.5 | Polydispersed | 2.7 | 3.5 | 4.2 |
| | 4 | | 683.5 | 123.1 | 1.5 | 4.5 | Polydispersed | 3.1 | 4.5 | 5.5 |
| | 5 | | 790.0 | 132.9 | 1.5 | 4.5 | Polydispersed | 3.5 | 4.8 | 6.7 |
| | 6 | | 259.0 | 32.0 | 2.5 | 3.2 | Monodispersed | 0 | 0 | - |
| | 7 | | 240.5 | 34.7 | 1.5 | 4.5 | Polydispersed | 2.7 | 10.7 | - |
| | 8 | | 256.0 | 28.0 | 0.5 | 0.6 | Monodispersed | 0 | 0 | - |
| | 9 | | 280.5 | 40.1 | 1.5 | 2.0 | Monodispersed | 0 | 0 | - |
| | 10 | | 523.0 | 139.4 | 2.5 | 3.2 | Monodispersed | 0 | 0 | - |
| | 11 | | 257.5 | 29.8 | 1.5 | 2.0 | Monodispersed | 0 | 3.0 | - |
| | 12 | | 257.0 | 37.6 | 1.5 | 4.5 | Polydispersed | 2.9 | 14.5 | - |
| | 13 | | 269.0 | 37.7 | 1.5 | 4.5 | Polydispersed | 2.4 | 18.0 | - |
| | 14 | | 318.5 | 45.1 | 1.5 | 2.0 | Monodispersed | 0.5 | 10.2 | - |
| Comparative Example | 1 | | 267.5 | 30.6 | 0.5 | 0.6 | Monodispersed | 8.9 | - | - |
| | 2 | | 271.5 | 30.5 | 0.5 | 0.6 | Monodispersed | 18.0 | - | - |
| | 3 | | 264.5 | 30.6 | 0.5 | 0.6 | Monodispersed | 27.0 | - | - |
| | 4 | | 274.5 | 31.3 | 1.5 | 2.0 | Monodispersed | 7.1 | - | - |
| | 5 | | 316.5 | 41.6 | 2.5 | 3.2 | Monodispersed | 23.0 | - | - |

**Claims**

1. A particle dispersion, comprising:

   particles; and
   a liquid medium,
   wherein a distance of a HSP value of the particles with respect to a HSP value of the liquid medium is 5.50 $MPa^{0.5}$ or less.

2. The particle dispersion according to claim 1,
   wherein the liquid medium includes an organic solvent.

3. The particle dispersion according to claim 1,
   wherein the liquid medium includes a plurality of organic solvents.

4. The particle dispersion according to claim 3,
   wherein the liquid medium includes methyl isobutyl ketone and toluene.

5. The particle dispersion according to any one of claims 2 to 4,
   wherein a content of the organic solvent is 80% by mass or more on the basis of a total mass of the liquid medium.

6. The particle dispersion according to any one of claims 1 to 4,
   wherein the particles include inorganic particles.

7. The particle dispersion according to any one of claims 1 to 4,
   wherein the particles contain at least one type selected from the group consisting of silica, ceria, alumina, titania, boron nitride, and calcium titanate.

8. The particle dispersion according to any one of claims 1 to 4,
   wherein the particles contain silica.

9. The particle dispersion according to any one of claims 1 to 4,
   wherein the particles have a surface treatment agent on surfaces of the particles.

10. The particle dispersion according to claim 9,
    wherein the surface treatment agent includes a silane compound having an alkoxysilyl group.

11. The particle dispersion according to any one of claims 1 to 4,
    wherein a particle size D50 at 50% cumulation in a cumulative particle size distribution based on a volume of the particles is 0.1 to 20 $\mu$m.

12. The particle dispersion according to any one of claims 1 to 4,
    wherein specific weight of the particles is 1.0 to 8.0 g/cm$^3$.

13. The particle dispersion according to any one of claims 1 to 4,
    wherein a content of the particles (including a content of a surface treatment agent in a case where the particles are subjected to a surface treatment) is 30 to 90% by mass on the basis of a total mass of the particle dispersion.

14. The particle dispersion according to any one of claims 1 to 4,
    wherein a viscosity at 25°C and a shear rate of 1 min$^{-1}$ is 350 mPa·s or more.

**INTERNATIONAL SEARCH REPORT**

| | International application No. |
|---|---|
| | **PCT/JP2023/023365** |

**A. CLASSIFICATION OF SUBJECT MATTER**

*C09D 17/00*(2006.01)i; *B01J 13/00*(2006.01)i; *C09D 7/62*(2018.01)i
FI: C09D17/00; B01J13/00 B; C09D7/62

According to International Patent Classification (IPC) or to both national classification and IPC

**B. FIELDS SEARCHED**

Minimum documentation searched (classification system followed by classification symbols)

C09C1/00-3/12; C09D1/00-201/10; B01J13/00;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/116978 A1 (NAGASE CHEMTEX CORP) 20 June 2019 (2019-06-20) paragraphs [0015]-[0018], [0030], [0051], [0078]-[0085], table 1-2, example 10 | 1-3, 5-6, 9, 11-14 |
| A | entire text | 4, 7-8, 10 |
| X | WO 2018/066458 A1 (ZEON CORP) 12 April 2018 (2018-04-12) paragraphs [0012], [0026], [0046]-[0049], [0068]-[0071], table 1, examples 1-4 | 1-3, 5, 11-14 |
| A | entire text | 4, 6-10 |
| X | JP 2021-147600 A (RICOH CO LTD) 27 September 2021 (2021-09-27) paragraphs [0034]-[0035], [0053], [0058]-[0059], [0090], [0094]-[0095], table 2, ink 15 | 1-3, 5-8, 12 |
| Y | paragraphs [0034]-[0035], [0053], [0058]-[0059], [0090], [0094]-[0095], table 2, ink 15 | 9-11 |
| A | entire text, all drawings | 4, 13-14 |
| Y | JP 2018-66012 A (RICOH CO LTD) 26 April 2018 (2018-04-26) paragraphs [0013]-[0014] | 9-11 |
| A | JP 2021-123722 A (RICOH CO LTD) 30 August 2021 (2021-08-30) table 1 | 1-3, 5-12 |

☑ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 August 2023** | **12 September 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

International application No.

**PCT/JP2023/023365**

### C.    DOCUMENTS CONSIDERED TO BE RELEVANT

| Category* | Citation of document, with indication, where appropriate, of the relevant passages | Relevant to claim No. |
|---|---|---|
| A | JP 2020-121528 A (RICOH CO LTD) 13 August 2020 (2020-08-13)<br>paragraph [0015], examples | 6-8 |
| A | JP 2019-194281 A (HITACHI CHEMICAL CO LTD) 07 November 2019 (2019-11-07)<br>paragraph [0107] | 1-14 |
| A | WO 2020/213637 A1 (MAZDA MOTOR) 22 October 2020 (2020-10-22)<br>entire text, all drawings | 1-14 |

Form PCT/ISA/210 (second sheet) (January 2015)

**INTERNATIONAL SEARCH REPORT**
Information on patent family members

| International application No. |
| --- |
| **PCT/JP2023/023365** |

| Patent document cited in search report | | | Publication date (day/month/year) | Patent family member(s) | Publication date (day/month/year) |
| --- | --- | --- | --- | --- | --- |
| WO | 2019/116978 | A1 | 20 June 2019 | (Family: none) | |
| WO | 2018/066458 | A1 | 12 April 2018 | US 2019/0276613 A1 paragraphs [0015], [0042], [0074]-[0089], [0121]-[0126], table 1, examples 1-4 | |
| JP | 2021-147600 | A | 27 September 2021 | US 2021/0292582 A1 paragraphs [0048]-[0051], [0077], [0083]-[0084], [0156]-[0159], [0166]-[0167], table 2, ink 15 | |
| JP | 2018-66012 | A | 26 April 2018 | (Family: none) | |
| JP | 2021-123722 | A | 30 August 2021 | US 2021/0238432 A1 table 1 | |
| JP | 2020-121528 | A | 13 August 2020 | (Family: none) | |
| JP | 2019-194281 | A | 07 November 2019 | (Family: none) | |
| WO | 2020/213637 | A1 | 22 October 2020 | US 2022/0177320 A1 entire text, all drawings | |

Form PCT/ISA/210 (patent family annex) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015519442 A